# EUROPÄISCHE PATENTANMELDUNG

(11) **EP 0 587 530 A1**
(43) Veröffentlichungstag der Anmeldung: **16.03.1994**
(21) Anmeldenummer: 93810596.2
(22) Anmeldetag: 23.08.1993
(51) Int. Cl.: A01K 1/00, A01K 1/02

(54) **Schweinemaststall Normbau**

(30) Priorität: 24.08.1992 CH 2617/92
(71) Anmelder: Stadelmann, Beat, CH-5632 Buttwil (CH)
(72) Erfinder: Stadelmann, Beat, CH-5632 Buttwil (CH)

(57) **Zusammenfassung**

Der Schweinemastkaltstall ohne Tiefstreue, jedoch mit eingestreuten, abgedeckten Liegenest besitzt einen Kunststoffvorhang.

Im Stall können alle Fütterungssysteme angewendet werden, von der Computerfütterung bis zur Automaten- und Bodenfütterung. Der Arbeitsaufwand für die Schweinemast kann mit diesem Stall je nach Fütterungsart sehr tief gehalten werden.

Der Stall ist sehr kostengünstig und trotzdem massiv gebaut. Er kann für verschiedene Schweinemastverfahren eingesetzt werden, ist zudem als tierfreundlich zu klassieren und bedeutet dadurch für den Landwirt eine echte Alternative zu den bisherigen Schweinehaltungssystemen, die auf dem Markt angeboten werden.

## Beschreibung

Die Erfindung betrifft einen Mastschweinestall nach dem Oberbegriff des Patentanspruches 1. Herkömmliche Mastschweineställe haben den Nachteil, dass sie
- viel teurer sind und daher die Rentabilität der Schweinemast in Frage stellen.
- nicht so schnell aufgestellt werden können.
- beim Erbauen viel mehr Eigenleistung benötigen.
- bezüglich Innenausstattung weniger Möglichkeiten haben.
- nicht wieder vollständig demontiert und an einem andern Ort wieder aufgebaut werden können.
- nicht ohne Probleme anderweitig verwendet werden können.
- nicht immer tiergerecht sind.
- nicht immer den Richtlinien einer naturnahen Schweinemast entsprechen.
- viel mehr Stroh brauchen, um die Sauberkeit der Tiere zu gewährleisten.
- bezüglich Sauberkeit zu wünschen überig lassen.
- eine schlechtere Stallluft aufweisen.
- nicht immer für den Winterbetrieb geeignet sind.
- nicht ohne Probleme mit allen Fütterungssystemen ausgerüstet werden können.
- arbeitsintensiver sind.

Die Aufgabe der vorliegenden Erfindung ist es, diese Nachteile zu beheben. Dies wird bei einem Mastschweinestall der eingangs erwähnten Art erreicht, welcher die Merkmale des kennzeichnenden Teils des Patentanspruches 1 aufweist.

Bei der Erfindung handelt es sich um einen Schweinemaststall, der im Normbauverfahren aufgestellt wird. Der Stall bietet Platz für ca. 60 - 70 Schweine in der Vormast, bzw. ca. 50 - 55 Tiere in der Ausmast. Bei grösseren Bauvorhaben können solche Einheiten nebeneinander aufgestellt werden.
Der Kaltstall ist nach dem Prinzip des Teilspaltenbodens konzipiert. Während der Ruhezeit können sich die Schweine in den Liegebereich zurückziehen. Dieser kann eingestreut werden. Der Stall besteht aus einem Betonunterbau und dem Holzaufbau. Der Unterbau wird durch Schwemmkanäle gebildet. Sie werden seitlich aneinander verschraubt, wobei ein Teil der Kanäle mit dem Boden nach oben montiert wird. Dabei entsteht sogleich der Festboden für die Tiere. Die übrigen Schwemmkanäle werden wie üblich hingelegt, mit den anderen Kanalelementen verschraubt und Betonroste eingelegt. Die Betonelemente können entweder alle nebeneinander, bzw. teilweise quer zueinander verschraubt werden. Durcli die Verschraubung wird dem ganzen Unterbau eine sehr gute Stabilität verleiht.
Die Betonbauteile sind aus einem Isolationsbeton hergestellt. Durch die Auswahl der verschiedenen Elementtypen kann das Verhältnis Festboden zu Spaltenboden verändert werden. Die Elemente können zum Beispiel eine Länge von 6.50 Meter, eine Breite von 1.20 Meter und eine Höhe von 0.7 Meter aufweisen.
Auf den Betonelementen kann ein Betonrand aufgegossen werden, auf dem nachher der Holzaufbau angeschraubt wird. Für die Abdichtung der Betonelemente wird eine spezielle Kittmasse verwendet.
Die Betonelemente können sowohl im Freien als auch auf einem gedeckten Platz hingelegt werden (z.B. Remise). Beim Bauen im Freien wird ein Aushub von ca. 50 cm Tiefe vorgenommen. Dieser darf nicht "Plan" sein, sondern muss auf die Auslaufseite der Jauche ein Gefälle von etwa einem Prozent aufweisen.

Der Aufbau des Stalles erfolgt vorwiegend aus Holz. Es kommen 2 Varianten für die Dachkonstruktion vor: Das Pultdach oder das Firstdach.

Der Holzaufbau wird auf den Seitenmauern angeschraubt. Auf einer Schmalseite ist der Stall ab einer Höhe von 1.20 Meter offen. Die Stalltüre wird auf der Offenfrontseite oder der Offenfront gegenüber liegenden Seite montiert.
Der Liegebereich der Schweine befindet sich auf den zwei Längsseiten des Stalles unter einer Abdeckung. Ein Kunststoffvorhang schliesst den Liegebereich gegen vorne ab. Die Schweine können diesen Vorhang ohne Probleme passieren.
Eine frostsichere Wassertränke (bis - 20 Grad Celcius) wird auf dem Festboden montiert. Die Wasserzufuhr erfolgt mit einer Leitung von unten durch die Betonelemente. Die Stromzufuhr erfolgt in der gleichen Art. Im Stall befindet sich eine Neonlampe und ein Stromstecker 220 Volt.
Das Dach wird mit Trapezblech, Eternit oder Ziegeln gedeckt. Ein Holzaufbau für einen 4 Tonnen fassenden Sacksilo kann auf dem Dach montiert werden.
Im Stallinnern besteht die Stalldecke aus Holz (Untertäferung). Die Entlüftung erfolgt auf natürliche Art durch die Offenfront und die seitlichen Lüftungsritzen am Dach.

Der Stall kann mit folgenden Fütterungssystemen ausgerüstet werden:
- Trockenautomatenfütterung mit Alleinfutter
- Breifutterautomat mit Alleinfutter
- Bodenfütterung
- Trogfütterung trocken
- Trogfütterung flüssig
- Computerfütterung

Der Stall ist sowohl für die konventionelle, als auch für die naturnahe Schweinemast geeignet. Die Tiere können nach Wunsch ins Freie gelassen werden, entweder auf einen Festplatz oder eine Wiese.

Im Stall wird eine neuartige Strohraufe eingesetzt, die den Tieren laufend Langstroh zur Verfügung hält. Die Raufe bietet Platz für eine ganze Balle Stroh. Eine Balle reicht für 2 bis 4 Wochen, je nach Grösse der Tiere. Die Futterraufe besteht aus Kunststoff und wird mit drei Ketten an der Decke aufgehängt.

## Patentansprüche

1. Als Kaltstall ausgebildeter Mastschweinestall mit Spaltenboden- und Festbodenfläche, dadurch gekennzeichnet, dass er eine gedeckte, zum Einstreuen vorgesehene Fläche mit einem Kunststoffvorhang aufweist, derart, dass er sowohl für die konventionelle als auch für die naturnahe Schweinemast verwendet werden kann.

2. Mastschweinestall nach Anspruch 1, dadurch gekennzeichnet, dass er folgende Komponenten besitzt:
a: Stallabstützeinrichtungen in Form von vorfabrizierten, speziell zusammengefügten Betonbauteilen
b: Eine Längsbucht mit einem Verhältnis von Spaltenbodenfläche zu Festbodenfläche von 1:3 bis 1:7

3. Mastschweinestall nach Anspruch 1, dadurch gekennzeichnet, dass ein Holzboden vorhanden ist auf einem Unterbau, wobei der Holzboden eine Leichtbetonschicht aufweist.

4. Mastschweinestall nach Anspruch 2 oder 3, dadurch gekennzeichnet, dass eine Innenseitenabdeckung mit einer Polyesterfolie vorgesehen ist.
